# FASCICULE DE BREVET EUROPEEN

(11) **EP 1 140 590 B1**
(45) Date de publication et mention de la délivrance du brevet: **01.12.2004**
(21) Numéro de dépôt: 99958306.5
(22) Date de dépôt: 10.12.1999
(51) Int. Cl.: B60S 1/38

(54) **ESSUIE-GLACE DE VEHICULE COMPORTANT UN TEMOIN DE VIEILLISSEMENT**
KRAFTFAHRZEUGSCHEIBENWISCHER MIT ALTERUNGSINDIKATOR
MOTOR VEHICLE WIPER COMPRISING A WEAR INDICATOR

(30) Priorité: 15.12.1998 FR 9815816
(43) Date de publication de la demande: 10.10.2001
(73) Titulaire: VALEO SYSTEMES D'ESSUYAGE, 78321 La Verrière (FR)
(72) Inventeur: BROSZNIOWSKI, François, F-78310 Maurepas (FR)
(86) Numéro de dépôt international: PCT/FR1999/003106
(87) Numéro de publication internationale: WO 2000/035726

(56) Documents cités:
- EP-A- 0 635 410
- DE-C- 4 311 846
- FR-A- 2 753 943

## Description

L'invention concerne les moyens d'essuyage du vitrage des véhicules automobiles et plus particulièrement un essuie-glace de véhicule automobile, muni d'un témoin de vieillissement. L'invention concerne aussi un balai d'essuie-glace de véhicule automobile, muni d'un témoin de vieillissement.

Un balai d'essuie-glace équipé de sa raclette d'essuyage en élastomère est une pièce d'usure du véhicule qu'il est nécessaire de remplacer régulièrement si l'on veut garantir une bonne qualité d'essuyage de la vitre. Cela s'avère notamment particulièrement important pour la sécurité de conduite lorsqu'il s'agit d'un balai d'essuie-glace du pare-brise du véhicule.

Les sources de l'usure du balai sont nombreuses et celui-ci est susceptible de se dégrader tant au niveau de la raclette d'essuyage que des joints et de la monture articulée qui la porte.

Par exemple, la raclette d'essuyage est susceptible de s'user par frottement mais elle peut également s'user du fait de l'altération du matériau qui la compose.

Les agents d'une telle altération sont principalement :
- la lumière solaire, et tout particulièrement les rayonnements ultraviolets qu'elle contient ;
- l'oxygène car, même si le véhicule stationne habituellement dans un garage fermé, donc à l'abri de la lumière, il ne peut être à l'abri de l'oxydation ;
- la température, les variations de température et l'humidité ;
- l'ozone et toutes les radiations électromagnétiques de l'environnement.

Il apparaît ainsi particulièrement pertinent de déterminer la durée de vie du balai d'essuie-glace en fonction de son temps d'exposition à l'air.

Par ailleurs, il est fréquent que les automobilistes soient incapables de se rappeler à quand remonte la dernière fois qu'ils ont procédé à l'échange de leurs balais d'essuie-glace. En effet, une telle opération n'est en général pas confiée à un spécialiste de la réparation automobile qui pourrait par exemple procéder à un remplacement systématique régulier des balais.

Il est connu, par exemple de la demande WO-A-95/01896, d'utiliser des témoins d'usure qui changent de couleur sous l'influence de l'environnement.

Le document FR-A-2.753.943 décrit un essuie-glace de véhicule automobile comportant un témoin de vieillissement. Ce témoin de vieillissement est destiné à changer de couleur en fonction de son degré d'oxydation.

Ces types de témoins présentent l'inconvénient majeur de n'être sensible qu'à un seul paramètre de vieillissement, par exemple au rayonnement ultraviolet ou à l'oxygène.

Le but de la présente invention est de permettre à l'automobiliste de déterminer un état de vieillissement fiable des balais d'essuie-glace de son véhicule à l'aide d'un témoin d'usure qui soit représentatif des contraintes réelles de vieillissement, et non dépendant d'un type d'ensoleillement, c'est-à-dire de la situation géographique ou météorologique, ou d'un type d'environnement, par exemple de la pollution ou de l'altitude.

Pour atteindre cet objectif, l'invention propose de prendre en compte, dans la composition du témoin d'usure, les principaux agents ou paramètres de vieillissement de la raclette de balais d'essuie-glace et leur action combinée dans les conditions d'utilisation.

L'invention a tout d'abord pour objet un essuie-glace de véhicule automobile muni d'un témoin de vieillissement (Essuie-glace du type divulgué dans FR-A-2 753 943), caractérisé en ce que le témoin comporte une substance à base d' au moins un composé base d'au moins un composé azoïque, dont la sensibilité aux conditions chimiques et physiques ainsi qu'aux contraintes mécaniques est comparable à celles des élastomères constituant les raclettes du balai.

Plus précisément, l'invention a pour objet un balai d'essuie-glace de véhicule automobile, muni d'un témoin de vieillissement (Balai du type divulgué dans FR-A-2 753 943), caractérisé en ce que le témoin comporte une substance à base d'au moins un composé azoïque, dont la sensibilité aux conditions chimiques et physiques ainsi qu'aux contraintes, mécaniques est comparable à celle des élastomères constitutant les raclettes du balai.

Il a en effet été remarqué que la sensibilité des composés azoïques aux conditions chimiques (oxygène, ozone) et physiques (rayonnements, température, humidité) ainsi qu'aux contraintes mécaniques est comparable à celle des élastoméres constituant les raclettes.

Selon des modes de réalisation de l'invention :
- le témoin de vieillissement est une étiquette multicouche comportant une couche d'adhésif et un film plastique support d'au moins une couche inerte d'une substance de couleur de référence et une couche réactive dégradable, composée d'une substance de couleur différente à base de composés azoïques ;
- les couches inerte et réactive sont formées par une encre dans laquelle une pigmentation chimiquement inerte, définissant une couleur de référence, et une pigmentation organique à base de dérivés azoïques sont respectivement réalisées ;
- les encres sont successivement déposées sur le support plastique par sérigraphie ;
- le support plastique est en polyvinyle, polypropylène ou polyester et est recouvert d'un cache de protection fixé au film support, de manière détachable, à l'aide d'un adhésif semi-poreux, ce cache étant retiré lors du montage du balai sur le véhicule;
- le témoin de vieillissement est porté par le balai d'essuie-glace.

D'autres caractéristiques et avantages de l'invention apparaîtront à la lecture de la description détaillée qui suit d'un exemple de réalisation, en référence aux figures annexées qui représentent, respectivement :
- la figure 1, une vue de face d'un exemple de témoin de vieillissement d'essuie-glace selon l'invention ;
- la figure 2, une vue en coupe selon le plan II-II du témoin de vieillissement selon la figure 1.

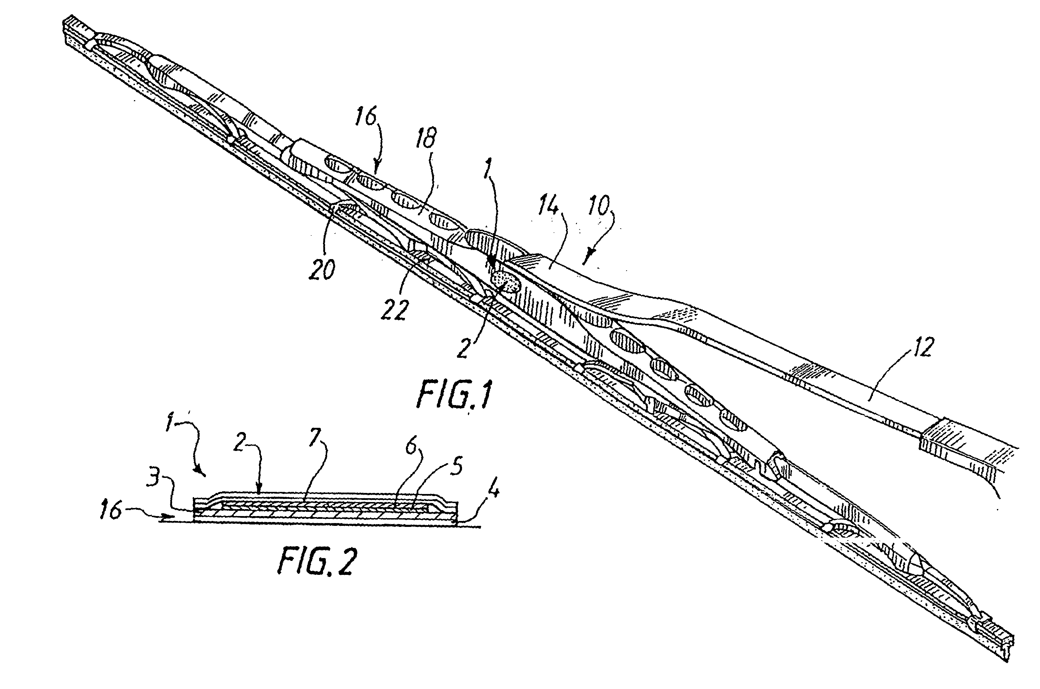

On a représenté sur la figure 1 un essuie-glace 10 de véhicule automobile qui comporte essentiellement un bras d'essuie-glace 12 à l'extrémité libre 14 duquel est monté articulé un balai d'essuie-glace 16.

Le balai d'essuie-glace 16 comporte une structure articulée 18 qui porte, par l'intermédiaire de griffes 20, une raclette d'essuyage 22 généralement réalisée en matériau élastomère souple. La structure articulée 18 est destinée à plaquer, sur toute sa longueur, la raclette d'essuyage 22 contre une vitre à essuyer du véhicule.

Conformément aux enseignements de l'invention, le balai d'essuie-glace 16 porte un témoin de vieillissement 1 incorporant une encre organique pigmentée à base d'un dérivé azoïque, sensible et dégradable en fonction des attaques chimiques et des contraintes mécaniques qu'elle subit.

Le témoin de vieillissement 1 pourra être également agencé en d'autres endroits de l'essuie-glace, pourvu qu'il soit aisément visible lorsque le balai d'essuie-glace 16 est monté sur le véhicule.

On utilise comme dérivé azoïque un sel alcalino-terreux d'azoïque à fonction sulfonique. Dans d'autres exemples de réalisation, les composés utilisés peuvent être des bis-azoïques, des tétra-bis-azoïques ou des azoïques à fonction sulfonique, pris individuellement ou en combinaison. De préférence, le composé utilisé fournit une couleur noire de manière à se distinguer nettement de la couleur de fond vive qui apparaît lorsque l'encre pigmentée par le dérivé azoïque est décomposée.

Dans l'exemple de réalisation, le témoin de vieillissement est réalisé sous la forme d'une étiquette autocollante recouverte d'une pellicule de protection 2 en polyéthylène, résistant en particulier aux rayonnements ultraviolets et à l'oxygène de l'air. Cette pellicule adhère au reste de l'étiquette à l'aide d'une couche d'adhésif semi-poreux, afin de pouvoir être aisément détachée lors de la mise en place du balai 16.

Il apparaît plus précisément sur la figure 2, qui illustre l'étiquette 1 vue en coupe, que celle-ci comporte, outre la pellicule 2 un film support 3 en polyvinyle, dont la face inférieure est enduite d'un adhésif 4 à fort pouvoir adhérent qui permet d'assurer une fixation définitive fiable du témoin de vieillissement 1 sur le balai 16. D'autres matériaux plastiques pourront être utilisés pour le film support, par exemple du polyester ou du polypropylène.

Sur le film support 3 est déposée une première couche d'encre 5, colorée en jaune à l'aide de pigments chimiquement inertes, et recouverte d'une deuxième couche d'encre 6 dont la couleur est obtenue par incorporation des pigments organiques de dérivés azoïques. A la fabrication du témoin de vieillissement 1, les couches d'encre 5 et 6 sont successivement déposées par une technique de type sérigraphie.

L'étiquette est recouverte d'un cache sous la forme de la pellicule de protection 2, fixée au film support 3 à l'aide d'un adhésif semi-poreux 7. Le cache est retiré lors du montage du balai sur le véhicule en le décollant du support.

Au cours du temps, les attaques chimiques, physiques et mécaniques détruisent les pigments azoïques de la couche supérieure 6. Une fois totalement décomposée, elle dévoile alors la couche inférieure jaune, qui n'a subi aucune attaque et qui indique un état de vieillissement avancée de la raclette du balai..

On a avantage à choisir une coloration intense pour la couche inférieure 5 lorsqu'elle est sous sa forme de plus bas degré d'oxydation. Ainsi, la perception du changement de couleur du témoin de vieillissement sera plus nette.

L'invention n'est pas limitée à l'exemple de réalisation décrit et représenté. Par exemple, afin de mieux contrôler la cinétique de la réaction de dégradation, on pourra superposer sur la couche réactive une couche de diffusion qui ralentit le contact entre cette couche et les attaques chimiques. Par ailleurs, il est possible de mélanger les pigments organiques à des oxydes minéraux, notamment à de l'oxyde de titane, afin d'améliorer la sensibilité du témoin.

## Revendications

1. Essuie-glace de véhicule automobile muni d'un témoin de vieillissement, **caractérisé en ce que** le témoin comporte une substance à base d'au moins un composé azoïque, dont la sensibilité aux conditions chimiques et physiques ainsi qu'aux contraintes mécaniques est comparable à celle des élastomères constituant les raclettes du balai.

2. Essuie-glace selon la revendication 1, **caractérisé en ce que** le témoin de vieillissement (1) est une étiquette multicouche comportant une couche d'adhésif (4) et un film plastique (3) support d'au moins une couche inerte (5) d'une substance de couleur de référence et une couche réactive dégradable (6) composée d'une substance de couleur différente à base de composés azoïques.

3. Essuie-glace selon la revendication 2, **caractérisé en ce que** les couches inerte et réactive sont formées respectivement par une encre dans laquelle une pigmentation chimiquement inerte, définissant la couleur de référence, et une pigmentation organique à base de dérivés azoïques sont réalisées.

4. Essuie-glace selon la revendication 3, **caractérisé en ce que** les pigments organiques sont mélangés à des oxydes minéraux, notamment à de l'oxyde de titane.

5. Essuie-glace selon la revendication 3, **caractérisé en ce que** les encres sont successivement déposées sur le support plastique par sérigraphie.

6. Essuie-glace selon l'une quelconque des revendications 2 à 5, **caractérisé en ce que** le support plastique est en polyvinyle, polypropylène ou polyester et est recouvert d'un cache de protection (2) fixé au film support (3) de manière détachable, à l'aide d'un adhésif semi-poreux (7), ce cache étant retiré lors du montage du balai (16) sur le véhicule.

7. Balai d'essuie-glace de véhicule automobile, muni d'un témoin de vieillissement, **caractérisé en ce que** le témoin comporte une substance à base d'au moins un composé azoïque, dont la sensibilité aux conditions chimiques et physiques ainsi qu'aux contraintes mécaniques est comparable à celle des élastomères constituant les raclettes du balai.

8. Balai d'essuie-glace selon la revendication 7, **caractérisé en ce que** le témoin de vieillissement (1) est une étiquette multicouche comportant une couche d'adhésif (4) et un film plastique (3) support d'au moins une couche inerte (5) d'une substance de couleur de référence et une couche réactive dégradable (6) composée d'une substance de couleur différente à base de composés azoïques,

9. Balai d'essuie-glace selon la revendication 8, **caractérisé en ce que** les couches inerte et réactive sont formées respectivement par une encre dans laquelle une pigmentation chimiquement inerte, définissant la couleur de référence, et une pigmentation organique à base de dérivés azoïques sont réalisées.

10. Balai d'essuie-glace selon la revendication 9, **caractérisé en ce que** les pigments organiques sont mélangés à des oxydes minéraux, notamment à de l'oxyde de titane.

11. Balai d'essuie-glace selon la revendication 9, **caractérisé en ce que** les encres sont successivement déposées sur le support plastique par sérigraphie.

12. Balai d'essuie-glace selon l'une quelconque des revendications 8 à 11, **caractérisé en ce que** le support plastique est en polyvinyle, polypropylène ou polyester et est recouvert d'un cache de protection (2) fixé au film support (3) de manière détachable, à l'aide d'un adhésif semi-poreux (7), ce cache étant retiré lors du montage du balai (16) sur le véhicule.

13. Essuie-glace de véhicule automobile comportant un balai d'essuie-glace selon l'une quelconque des revendications 7 à 12.

## Patentansprüche

1. Scheibenwischer für ein Kraftfahrzeug, ausgestattet mit einem Alterungsanzeiger, **dadurch gekennzeichnet, dass** der Anzeiger eine Substanz auf der Basis zumindest einer Azoverbindung enthält, deren Empfindlichkeit gegenüber chemischen und physikalischen Bedingungen sowie mechanischen Beanspruchungen vergleichbar ist mit denjenigen der Elastomere, aus denen die Wischergummis bestehen.

2. Scheibenwischer nach Anspruch 1, **dadurch gekennzeichnet, dass** der Alterungsanzeiger (1) ein mehrschichtiger Aufkleber ist, bestehend aus einer Haftschicht (4) und einer Plastikfolie (3), die mindestens eine inerte Schicht (5) einer farbigen Referenzsubstanz trägt, und einer abbaubaren reaktiven Schicht (6), bestehend aus einer Substanz einer anderen Farbe auf der Basis von Azoverbindungen.

3. Scheibenwischer nach Anspruch 2, **dadurch gekennzeichnet, dass** die inerte und die reaktive Schicht aus jeweils einer Druckfarbe bestehen, in denen eine chemisch inerte, eine Referenzfarbe definierende Pigmentation, und eine organische Pigmentation auf der Basis von Azoderivaten realisiert sind.

4. Scheibenwischer nach Anspruch 3, **dadurch gekennzeichnet, dass** die organischen Pigmente mit mineralen Oxiden, insbesondere mit Titanoxid gemischt werden.

5. Scheibenwischer nach Anspruch 3, **dadurch gekennzeichnet, dass** die Druckfarben nacheinander im Siebdruckverfahren auf dem Plastikträger aufgebracht werden.

6. Scheibenwischer nach einem der Ansprüche 2 bis 5, **dadurch gekennzeichnet, dass** der Plastikträger aus Polyvinyl, Polypropylen oder Polyester besteht und mit einer an der Trägerfolie (3) befestigten, abziehbaren Schutzhülle (2) bedeckt ist, und zwar anhand eines halbporösen Klebstoffs (7), wobei diese Schutzhülle bei der Montage des Blatts (16) am Fahrzeug abgezogen wird.

7. Scheibenwischerblatt für ein Kraftfahrzeug, ausgestattet mit einem Alterungsanzeiger, **dadurch gekennzeichnet, dass** der Anzeiger eine Substanz auf der Basis zumindest einer Azoverbindung enthält, deren Empfindlichkeit gegenüber chemischen und physikalischen Bedingungen sowie mechanischen Beanspruchungen vergleichbar ist mit derjenigen der Elastomere, aus denen die Wischergummis bestehen.

8. Scheibenwischerblatt nach Anspruch 7, **dadurch gekennzeichnet, dass** der Alterungsanzeiger (1) ein mehrschichtiger Aufkleber ist, bestehend aus einer Haftschicht (4) und einer Plastikfolie (3), die mindestens eine inerte Schicht (5) einer farbigen Referenzsubstanz trägt, und einer abbaubaren reaktiven Schicht (6), bestehend aus einer Substanz einer anderen Farbe auf der Basis von Azoverbindungen.

9. Scheibenwischerblatt nach Anspruch 8, **dadurch gekennzeichnet, dass** die inerte und die reaktive Schicht aus jeweils einer Druckfarbe bestehen, in der eine chemisch inerte, eine Referenzfarbe definierende Pigmentation, und eine organische Pigmentation auf der Basis von Azoderivaten realisiert sind.

10. Scheibenwischerblatt nach Anspruch 9, **dadurch gekennzeichnet, dass** die organischen Pigmente mit mineralen Oxiden, insbesondere mit Titanoxid gemischt werden.

11. Scheibenwischerblatt nach Anspruch 9, **dadurch gekennzeichnet, dass** die Druckfarben nacheinander im Siebdruckverfahren auf dem Plastikträger aufgebracht werden.

12. Scheibenwischer nach einem der Ansprüche 8 bis 11, **dadurch gekennzeichnet, dass** der Plastikträger aus Polyvinyl, Polypropylen oder Polyester besteht und mit einer an der Trägerfolie (3) befestigten, abziehbaren Schutzhülle (2) bedeckt ist, und zwar anhand eines halbporösen Klebstoffs (7), wobei diese Schutzhülle bei der Montage des Blatts (16) am Fahrzeug abgezogen wird.

13. Scheibenwischer für ein Kraftfahrzeug mit einem Scheibenwischerblatt nach einem der Ansprüche 7 bis 12.

## Claims

1. A motor vehicle wiper provided with an ageing indicator, **characterised in that** the indicator comprises a substance based on at least one azo compound, whose sensitivity to the chemical and physical conditions and to the mechanical stresses is comparable to that of the elastomers constituting the scrapers of the blade.

2. A wiper according to Claim 1, **characterised in that** the ageing indicator (1) is a multilayer label comprising an adhesive layer (4) and a plastic film (3) supporting at least one inert layer (5) of a substance of reference colour and a degradable reactive layer (6) consisting of a substance of different colour based on azo compounds.

3. A wiper according to Claim 2, **characterised in that** the inert and reactive layers are formed respectively by an ink in which a chemically inert pigmentation, defining the reference colour, and an organic pigmentation based on azo derivatives are implemented.

4. A wiper according to Claim 3, **characterised in that** the organic pigments are mixed with mineral oxides, in particular a titanium oxide.

5. A wiper according to Claim 3, **characterised in that** the inks are successively deposited on the plastic support by silk screen printing.

6. A wiper according to any one of Claims 2 to 5, **characterised in that** the plastic support is made of polyvinyl, polypropylene or polyester and is covered with a protective mask (2) fixed to the support film (3) in a detachable manner, by means of a semi-porous adhesive (7), this mask being removed at the time of mounting of the blade (16) on the vehicle.

7. A motor vehicle wiper blade, provided with an ageing indicator, **characterised in that** the indicator comprises a substance based on at least one azo compound, whose sensitivity to the chemical and physical conditions and to the mechanical stresses is comparable to that of the elastomers constituting the scrapers of the blade.

8. A wiper blade according to Claim 7, **characterised in that** the ageing indicator (1) is a multilayer label comprising an adhesive layer (4) and a plastic film (3) supporting at least one inert layer (5) of a substance of reference colour and a degradable reactive layer (6) consisting of a substance of different colour based on azo compounds.

9. A wiper blade according to Claim 8, **characterised in that** the inert and reactive layers are formed respectively by an ink in which a chemically inert pigmentation, defining the reference colour, and an organic pigmentation based on azo derivatives are implemented.

10. A wiper blade according to Claim 9, **characterised in that** the organic pigments are mixed with mineral oxides, in particular a titanium oxide.

11. A wiper blade according to Claim 9, **characterised in that** the inks are successively deposited on the plastic support by silk screen printing.

12. A wiper blade according to any one of Claims 8 to 11, **characterised in that** the plastic support is made of polyvinyl, polypropylene or polyester and is covered with a protective mask (2) fixed to the support film (3) in a detachable manner, by means of a semi-porous adhesive (7), this mask being removed at the time of mounting of the blade (16) on the vehicle.

13. A motor vehicle wiper comprising a wiper blade according to any one of Claims 7 to 12.
